# EUROPEAN PATENT SPECIFICATION

(11) **EP 1 056 332 B1**
(45) Date of publication and mention of the grant of the patent: **09.07.2003**
(21) Application number: 99907953.6
(22) Date of filing: 22.02.1999
(51) Int. Cl.: A01G 5/00, A23N 15/04

(54) **APPARATUS FOR SHEARING THE STEMS OF CROPS AND THE LIKE**
VORRICHTUNG ZUM SCHNEIDEN VON PFLANZENSTENGELN UND DERGLEICHEN
APPAREIL PERMETTANT DE CISAILLER LES TIGES DE PLANTES CULTIVEES ET ANALOGUE

(30) Priority: 26.02.1998 NL 1008428
(43) Date of publication of application: 06.12.2000
(73) Proprietor: Exploitatiemaatschappij van den Berg Blokker B.V., 1696 AM Oosterblokker (NL)
(72) Inventor: MIEDEMA, Willibrordus, Jaring, NL-1778 KN Westerland (NL)
(74) Representative: Metman, Karel Johannes
(86) International application number: NL9900092
(87) International publication number: WO99043200

(56) References cited:
- EP-A- 0 286 017
- WO-A-88/10064
- US-A- 2 033 293
- US-A- 3 738 212

## Description

The present invention relates to an apparatus for shearing the stems of crops and the like, comprising first and second shearing members moveable to and away from each other and each including a cutting face, and a drive for effecting the movement of at least one shearing member.

Several apparatus exist for cutting-off the stems of crops, for example sawing, cutting and shearing apparatus. The cutting and sawing apparatus comprise a circular cutting blade or saw blade, by means of which the stems of a bunch of flowers or the stems of a shrub are cut off to the same length. The drawback of these apparatus is that they produce relatively much noise, and that they are furthermore not very suitable for cutting off woody stems of crops.

A shearing apparatus in accordance with the preamble of claim 1 is known per se see US-A-3 738 212, it comprises an upper and a lower shearing member, wherein the lower shearing member consists of a stationary blade and wherein the upper shearing member consists of a moveable blade, which is capable of upward and downward movement past the lower blade. The drawback of this is that the cut surface of the stem portion that remains does not look nice, and that the blades tend to move apart when cutting thicker, woody stems, with fibres remaining on the cut surfaces.

The object of the present invention is to provide a shearing apparatus of the kind referred to in the preamble, wherein the above drawbacks are alleviated or eliminated in an efficient manner.

In order to accomplish that object, the apparatus according to the invention is characterized in that the drive of the shearing member is such that the relative movement of the shearing members includes both a component of motion perpendicularly to the cutting plane and a component of motion parallel thereto.

This special movement of the shearing members relative to each other results in a combined cutting and shearing movement, as it were, which leads to a much better cutting performance. The required shearing force is much lower, whilst the risk of fibres being formed is much smaller, because said fibres are cut through during this cutting movement.

For the sake of simplicity, it is advantageous for the first shearing member to be stationary and the second shearing member to be moveable. Preferably, the stationary first shearing member is constructed as an anvil in that case.

In this embodiment, moving apart of the shearing members no longer takes place, because deformation of the anvil is excluded and the moveable second shearing member is loaded symmetrically relative to the shearing plane, as a result of which there will be no moving out in a direction perpendicularly to the moveable shearing member.

It is advantageous thereby if the stationary first shearing member is constructed with an insert of plastic material for cooperation with the second shearing member, since the plastic material will not cause any wear on the second shearing member, whilst the cutting movement of the second shearing member nevertheless provides a good cutting performance, without a sharp first cutting member being needed. In that case, the blade may be thin and be sharpened on two sides, so that the stems will not be damaged by the shearing member.

A further improvement of the apparatus according to the invention is realised by constructing the drive of the second shearing member as a circular drive, such that the component of motion of the second shearing member parallel to the cutting plane is continued in the same direction after engagement with the first shearing member and before the return movement is started.

Such a circular movement of the second shearing member also has a very advantageous effect on the cutting performance, whilst this aspect furthermore makes the apparatus suitable for being incorporated in a flower processing line, wherein the flowers, shrubs or the like are transported in one direction and through the shearing apparatus, as it were. The return movement of the second shearing member does not take place until the cutting movement has been completed and the second shearing member is no longer in contact with the first shearing member.

It is also advantageous in this flower processing line if the second shearing member opens widely on the in-feed side and only a little on the outlet side, since a wedge is formed in this manner, into which the stems of the crop can be easily introduced and correctly positioned with respect to the shearing members. It is advantageous thereby if the second shearing member is moved completely out of contact with the first shearing member, so that the crop can still be discharged from the shearing apparatus in the exceptional event that the stems are not cut through completely.

The invention will be explained in more detail hereafter with reference to the drawings, which show an embodiment of the apparatus according to the invention.

Fig. 1 is a schematic cross-sectional view of the embodiment of the apparatus according to the invention.

Figs. 2 - 7 are very schematic front views of the apparatus according to Fig. 1, showing six different positions during shearing.

The drawings show an apparatus for shearing the stems of crops and the like, wherein the apparatus is especially suitable for shearing woody stems, for example those of chrysanthemums and shrubs, such as forsythia. The apparatus is also quite usable, however, for a shearing other kinds of cut flowers or also vegetables, such as asparagus and the like.

In order to be able to carry out its shearing function, the apparatus is provided with a first, stationary shearing member in the form of an anvil 1, and with a moveable second shearing member in the form of a blade 2, which cooperates therewith. Said blade 2 is thin and sharpened on two sides so as to achieve an optimum shearing/cutting performance. Anvil 1 is provided with an insert 3 of plastic material, for example HDPE. A V-shaped groove having a depth of a number of millimetres may be provided in said plastic insert 3, into which groove blade 2 can move so as to shear the crop even better.

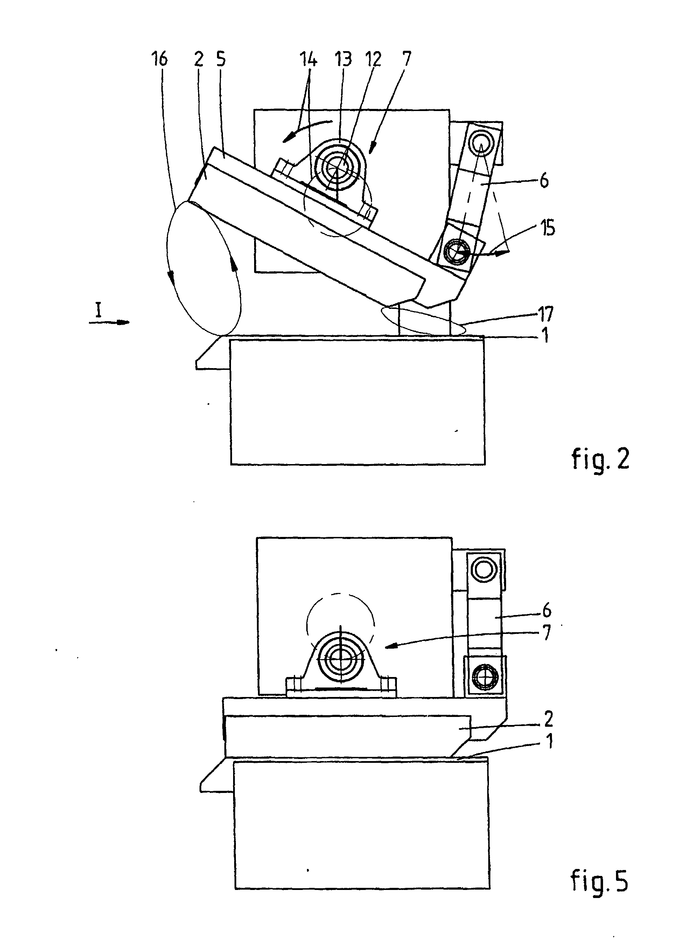

Blade 2 is secured to an upper jaw or upper beam 5 by means of screws 4 or similar fasteners. Upper beam 5 is moveably suspended from a frame 8, via a rocker arm 6 and a crank mechanism 7. Rocker arm 6 is connected to the end of upper beam 5 which is positioned at the discharge end of the shearing apparatus. The feeding direction is indicated by means of arrow I in Fig. 2. Rocker arm 6 is pivotally connected to a part of frame 8 of the apparatus at its upper end.

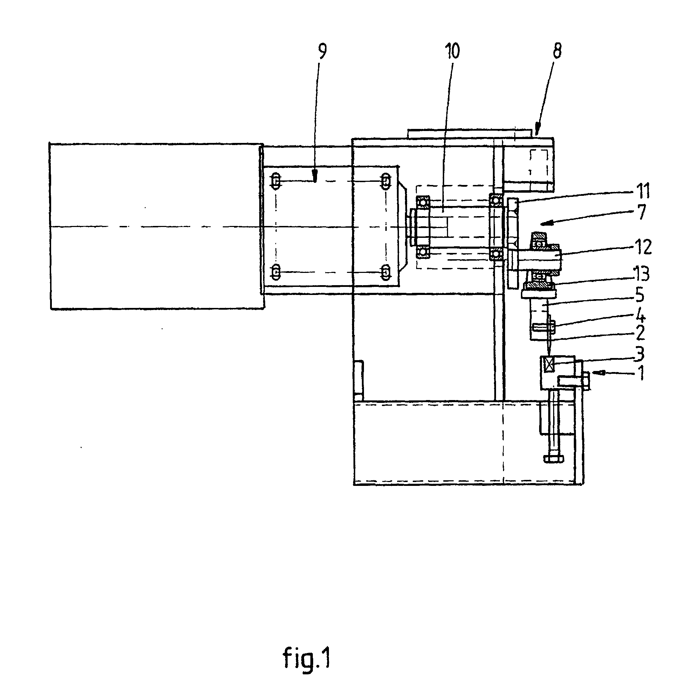

Crank mechanism 7 is connected to upper beam 5 in a point some distance away from rocker arm 6, in the direction of the in-feed side of the apparatus. As is shown in Fig. 1, crank mechanism 7 comprises a crankshaft 10 journalled in frame 8, which is driven by an electric motor 9, to the end of which a crank 11 is secured. Mounted on said crank 11, at some distance from the central axis of crankshaft 10, is a crank stud 12, which crank stud 12 is rotatably supported, via a bearing, in a bracket which is mounted on upper beam 5.

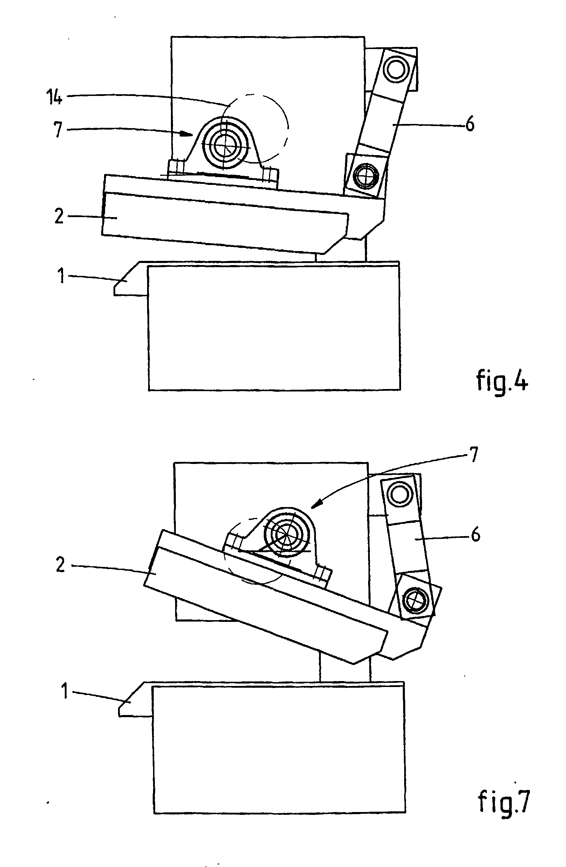

When crankshaft 10 is being driven by electric motor 9, crank stud 12 will make the circular movement which is illustrated in Figs. 2 - 7 (chain-dotted line and arrow 14), whilst the end of rocker arm 6 that is connected to upper beam 5 will move reciprocatingly as indicated by arrow 15. This circular movement 14 and the rocking movement 15 of crank mechanism 7 and rocker arm 6 cause blade 2 to make the movement which is illustrated in Fig. 2, with a path 16 described by the end of blade 2 that is present on the in-feed side of the apparatus and a path 17 described by the end of blade 2 that is present on the outlet side of the apparatus. The figure shows that path 16 on the in-feed side includes a relatively large component of motion in a direction perpendicularly to the cutting face of anvil 1, whilst the end of blade 2 on the outlet side describes a circular path 17 which includes a relatively small component of motion in a direction perpendicularly to the cutting face of anvil 1. Circular paths 16 and 17 furthermore show, and this is an important feature of the invention, that blade 2, in addition to including a component of motion perpendicularly to the cutting face of anvil 1, also includes a component of motion in a direction parallel to the cutting face of anvil 1, as a result of which blade 2 not only makes a shearing movement but also a cutting movement, which leads to a significant improvement as regards the cutting performance. Finally, the circular paths 16 and 17 clearly show that blade 2 does not start its return movement in a direction opposed to the direction of feeding or transport of the crop until blade 2 is no longer in contact with anvil 1.

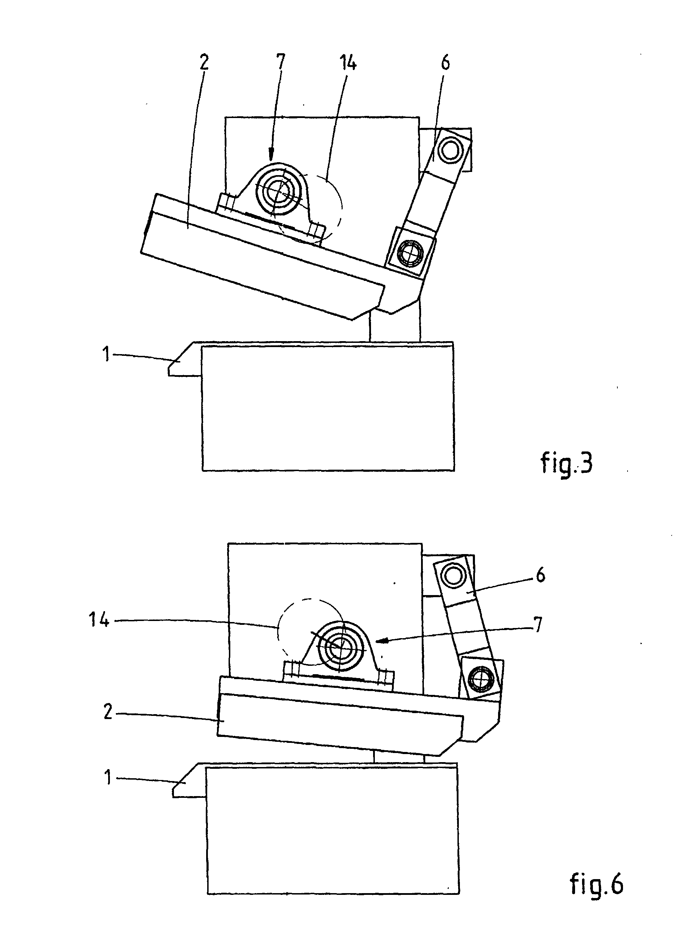

Figs. 2 - 7 show the movement of blade 2 which is caused during the driving engagement of electric motor 9 as a result of the dimensioning of crank mechanism 7 and rocker arm 6. As is shown in Fig. 2, blade 2 and anvil 1 form a wedge-shaped opening during the initial part of the a shearing movement, into which a crop to be sheared can be easily introduced and positioned under blade 2. Figs. 3, 4 and 5 show the manner in which blade 2 is moved towards anvil 1 in a combined pivoting and translating movement, wherein a strong cutting movement is carried out precisely in the last phase of the shearing cycle so as to cut through any hard parts of the stems of the crop. In the position which is shown in Fig. 5, the cutting face of blade 2 just comes into contact with the bottom of the groove in insert 3 of anvil 1, that is, at a level which is slightly lower than the upper surface of the anvil on which the part of the crop that is to be sheared is present. Figs. 6 and 7 show that blade 2, after being disengaged from anvil 1, has been moved further in the direction of transport of the crop, and that it is only moved back in a direction opposed to the direction of transport of the crop, to the position as shown in Fig. 2, upon further movement from the position as shown in Fig. 6. This continued movement of blade 2 upon shearing makes the apparatus quite suitable for being incorporated in a processing line, such as a flower line or the like, wherein the crop is moved forward and subjected to various operations thereby, such as stripping, binding and cutting.

When the apparatus is incorporated in a processing line, the conveyor on which the crop rests in large measure will be positioned to the right of anvil 1, seen in Fig. 1, and the crop portion to be cut off will be positioned to the left of blade 2. After being cut off, the loose stem ends or the like can easily fall down and possibly be discharged. The crop can then be transported further without being impeded by the apparatus.

From the foregoing it will be apparent that the invention provides an apparatus for shearing crops or the like, which excels by its good cutting performance and its wide usability, also for crops or other products which are easier to shear.

## Claims

1. An apparatus for shearing the stems of crops and the like, comprising first and second shearing members (1, 2) moveable to and away from each other and each including a cutting face, and a drive (6, 7, 9-12) for effecting the movement of at least one shearing member (2), **characterized in that** the drive (6, 7, 9-12) of the at least one shearing member (2) is such that the relative movement of the shearing members (1, 2) includes, in addition to a component of motion perpendicularly to their cutting faces, a component of motion parallel to their cutting faces so as to create a combined pivoting and translating movement.

2. An apparatus according to claim 1, wherein the first shearing member (1) is stationary and the second shearing member (2) is moveable.

3. An apparatus according to claim 1, wherein said stationary first shearing member (1) is constructed as an anvil.

4. An apparatus according to claim 3, wherein the stationary first shearing member (1) is constructed with an insert (3) of plastic material for cooperation with the second shearing member (2).

5. An apparatus according to any one of the preceding claims, wherein the drive (6, 7, 9-12) of the second shearing member (2) is constructed as a circular drive, such that the component of motion of the second shearing member (2) parallel to the cutting face of the first shearing member (1) is continued in the same direction after engagement with the first shearing member (1) and before the return movement is started.

6. An apparatus according to claim 5, wherein one end of the second shearing member (2) describes a circulating path (16) which includes a relatively large component of motion in a direction perpendicularly to the cutting face of the first shearing member (1), and that the end of the second shearing member (2) describes a circulating path (17) which includes a relatively small component of motion in a direction perpendicularly to the cutting face of the first shearing member (1).

7. An apparatus according to claim 5, wherein said drive (6, 7, 9-12) comprises a crank mechanism (7).

8. An apparatus according to claim 7, wherein said second shearing member (2) is suspended from a rocker arm (6) near one end, whilst it is connected to said crank mechanism (7) at some distance from said rocker arm.

9. An apparatus according to claim 8, wherein said crank mechanism (7) and said rocker arm (6) are geared to each other in such a manner that the end of the second shearing member (2) present on the side of the crank mechanism describes a circulating path (16) which includes a relatively large component of motion in a direction perpendicularly to the cutting face of the first shearing member (1), and that the end of the second shearing member (2) present on the side of the rocker arm (6) describes a circulating path which includes a relatively small component of motion in a direction perpendicularly to the cutting face of the first shearing member (1).

10. An apparatus according to any one of the preceding claims, wherein said second shearing member (2) consists of a blade which is sharpened on two sides.

11. A processing line for processing and transporting crops and the like, comprising a conveyor and a shearing apparatus disposed along said conveyor, which shearing apparatus comprises first and second shearing members (1, 2) moveable to and away from each other and each including a cutting face, and a drive (6, 7, 9-12) for effecting the movement of at least one shearing member, **characterized in that** the drive (6, 7, 9-12) of the at least one shearing member (2) is such that the relative movement of the shearing members (1, 2) includes, in addition to a component of motion perpendicularly to their cutting faces, a component of motion parallel to their cutting faces so as to create a combined pivoting and translating movement.

12. A processing line according to claim 11, wherein the drive (6, 7, 9-12) of the second shearing member (2) is constructed as a circulating drive, such that the component of motion of the second shearing member parallel to the cutting face of the first shearing member (1) is continued in the same direction after engagement with the first shearing member (1) and before the return movement is started.

13. A processing line according to claim 10 or 11, wherein one end of the second shearing member (2) describes a circulating path (16) which includes a relatively large component of motion in a direction perpendicularly to the cutting face of the first shearing member (1), and that the other end of the second shearing member (2) describes a circulating path (17) which includes a relatively small component of motion in a direction perpendicularly to the cutting face of the first shearing member (1), wherein said one end of the shearing member including said relatively large component in a direction perpendicularly to the cutting face of the first shearing member (1) is positioned on the in-feed side of the apparatus.

## Patentansprüche

1. Vorrichtung zum Abschneiden von Pflanzenstengeln und dergleichen, mit ersten und zweiten Schergliedern (1, 2), welche aufeinander zu- und voneinander wegbewegbar sind und von denen jedes eine Schneidfläche aufweist, und mit einem Antrieb (6, 7, 9 - 12), zum Bewirken der Bewegung mindestens eines Scherglieds (2), **dadurch gekennzeichnet, daß** der Antrieb (6, 7, 9-12) mindestens eines Scherglieds (2) derart ist, daß die relative Bewegung der Scherglieder (1, 2), zusätzlich zu einem Bewegungsanteil senkrecht zu deren Schneidfläche einen Bewegungsanteil parallel zu deren Schneidfläche aufweist, um so eine kombinierte Schwenk- und Translationsbewegung zu schaffen.

2. Vorrichtung nach Anspruch 1, wobei das erste Scherglied (1) stationär und das zweite Scherglied (2) beweglich ist.

3. Vorrichtung nach Anspruch 1, wobei das stationäre erste Scherglied (1) als ein Amboß gestaltet ist.

4. Vorrichtung nach Anspruch 3, wobei das stationäre erste Scherglied (1) mit einem Einsatz (3) aus Kunststoffmaterial für ein Zusammenwirken mit dem zweiten Scherglied (2) ausgestattet ist.

5. Vorrichtung nach einem der vorangehenden Ansprüche, wobei der Antrieb (6, 7, 9-12) des zweiten Scherglieds (2) derart als Umlaufantrieb gestaltet ist, daß der Bewegungsanteil des zweiten Scherglieds (2) parallel zur Schneidfläche des ersten Scherglieds (1), nach dem Inangriffkommen an dem ersten Scherglied (1) und bevor die Rückstellbewegung beginnt, in der gleichen Richtung beibehalten wird.

6. Vorrichtung nach Anspruch 5, wobei ein Ende des zweiten Schergliedes (2) eine umlaufende Bahn beschreibt, welche einen relativ großen Bewegungsanteil in einer Richtung senkrecht zur Schneidfläche des ersten Scherglieds (1) aufweist und wobei das Ende des zweiten Scherglieds (2) eine umlaufende Bahn (17) beschreibt, welche eine relativ kleinen Bewegungsanteil in der Richtung senkrecht zur Schneidfläche des ersten Scherglieds (1) aufweist.

7. Vorrichtung nach Anspruch 5, wobei der Antrieb (6, 7, 9-12) einen Kurbelmechanismus aufweist.

8. Vorrichtung nach Anspruch 7, wobei das zweite Scherglied (2) in der Nähe eines Endes von einem Lenker (6) hängend getragen und in einem gewissen Abstand zu dem Lenker mit dem Kurbelmechanismus (7) verbunden ist.

9. Vorrichtung nach Anspruch 8, wobei der Kurbelmechanismus (7) und der Lenker (6) in einer Weise miteinander bewegungsverbunden sind, daß das auf der Seite des Kurbelmechanismus befindliche Ende des zweiten Scherglieds (2) eine umlaufende Bahn (16) beschreibt, welche einen relativ großen Bewegungsanteil in einer Richtung senkrecht zur Schneidfläche des ersten Scherglieds (1) aufweist und daß das auf der Seite des Lenkers (6) befindliche Ende des zweiten Scherglieds (2) eine umlaufende Bahn beschreibt, welche einen kleinen Bewegungsanteil in einer Richtung senkrecht zur Schneidfläche des ersten Scherglieds (1) aufweist.

10. Vorrichtung nach einem der vorstehenden Ansprüche, wobei das zweite Scherglied (2) aus einer Klinge besteht, die auf zwei Seiten geschärft ist.

11. Verarbeitungslinie zum Verarbeiten und Transportieren von Pflanzen und dergleichen, mit einem Förderer und einer auf einer Seite des Förderers angeordneten Schervorrichtung, wobei die Schervorrichtung erste und zweite Scherglieder (1, 2) umfaßt, welche aufeinander zu- und voneinander wegbewegbar sind und von denen jedes eine Schneidfläche aufweist, und mit einem Antrieb (6, 7, 9 - 12), zum Bewirken der Bewegung mindestens eines Scherglieds (2), **dadurch gekennzeichnet, daß** der Antrieb (6, 7, 9-12) des mindestens einen Schergliedes derart ist, daß die relative Bewegung der Scherglieder (1, 2) zusätzlich zu einem Bewegungsanteil senkrecht zu deren Schneidflächen, einen Bewegungsanteil parallel zu deren Schneidflächen aufweist, um so eine kombinierte Dreh- und Translationsbewegung zu schaffen.

12. Verarbeitungslinie nach Anspruch 11, wobei der Antrieb (6, 7, 9-12) des zweiten Scherglieds (2) derart als umlaufender Antrieb gestaltet ist, daß der Bewegungsanteil des zweiten Scherglieds (2), parallel zur Schneidfläche des ersten Scherglieds (1), nach dem Inangriffkommen an dem ersten Scherglied (1) und bevor die Rückstellbewegung beginnt, in der gleichen Richtung beibehalten wird.

13. Verarbeitungslinie nach Anspruch 10 oder 11, wobei ein Ende des zweiten Schergliedes (2) eine umlaufende Bahn (16) beschreibt, welche einen relativ großen Bewegungsanteil in einer Richtung senkrecht zur Schneidfläche des ersten Scherglieds (1) aufweist, und wobei das Ende des zweiten Scherglieds (2) eine umlaufende Bahn (17) beschreibt, welche einen relativ kleinen Bewegungsanteil in der Richtung senkrecht zur Schneidfläche des ersten Scherglieds (1) aufweist, wobei das Ende des ersten Scherglieds, das einen relativ großen Bewegungsanteil in einer Richtung senkrecht zu der Schneidfläche des ersten Scherglieds (1) aufweist, auf der Eingabeseite der Vorrichtung angeordnet ist.

## Revendications

1. Appareil destiné à cisailler les tiges de plantes et analogues, comprenant un premier et un deuxième élément de cisaillement (1, 2) mobiles en rapprochement et en éloignement l'un vis-à-vis de l'autre et comprenant chacun une face de coupe, et une commande (6, 7, 9 à 12) destinée à assurer le mouvement d'au moins l'un des éléments de cisaillement (2), **caractérisé en ce que** la commande (6, 7, 9 à 12) d'au moins l'un des éléments de cisaillement (2) est telle que le mouvement relatif des éléments de cisaillement (1, 2) comprend, outre une composante de mouvement perpendiculaire à leurs faces de coupe, une composante de mouvement parallèle à leurs faces de coupes de manière à créer un mouvement combiné de pivotement et de translation.

2. Appareil selon la revendication 1, dans lequel le premier élément de cisaillement (1) est fixe et le deuxième élément de cisaillement (2) est mobile.

3. Appareil selon la revendication 1, dans lequel ledit premier élément de cisaillement (1) est réalisé sous la forme d'une enclume.

4. Appareil selon la revendication 3, dans lequel le premier élément de cisaillement fixe (1) est réalisé avec une insertion (3) de matériau plastique destiné à une coopération avec le deuxième élément de cisaillement (2).

5. Appareil selon l'une quelconque des revendications précédentes, dans lequel la commande (6, 7, 9 à 12) du deuxième élément de cisaillement (2) est réalisée sous la forme d'une commande circulaire, de manière à ce que la composante de mouvement du deuxième élément de cisaillement (2) parallèle à la face de coupe du premier élément de cisaillement (1) se poursuive dans la même direction après la mise en prise avec le premier élément de cisaillement (1) et avant que le mouvement de retour ne soit commencé.

6. Appareil selon la revendication 5, dans lequel l'une des extrémités du deuxième élément de cisaillement (2) décrit une trajectoire périodique (16) qui comprend une composante de mouvement relativement importante dans une direction perpendiculaire à la face de coupe du premier élément de cisaillement (1), et dans lequel l'extrémité du deuxième élément de cisaillement (2) décrit une trajectoire périodique (17) qui comprend une composante de mouvement relativement faible dans une direction perpendiculaire à la face de coupe du premier élément de cisaillement (1).

7. Appareil selon la revendication 5, dans lequel ladite commande (6, 7, 9 à 12) comprend un mécanisme de manivelle (7).

8. Appareil selon la revendication 7, dans lequel ledit deuxième élément de cisaillement (2) est suspendu à un bras de culbuteur (6) près d'une extrémité, alors qu'il est relié audit mécanisme de manivelle (7) à une certaine distance dudit bras de culbuteur.

9. Appareil selon la revendication 8, dans lequel ledit mécanisme de manivelle (7) et ledit bras de culbuteur (6) sont engrenés l'un avec l'autre d'une manière telle que l'extrémité du deuxième élément de cisaillement (2) qui se trouve sur le côté du mécanisme de manivelle décrit une trajectoire périodique (16) qui comprend une composante de mouvement relativement importante dans une direction perpendiculaire à la face de coupe du premier élément de cisaillement (1), et dans lequel l'extrémité du deuxième élément de cisaillement (2) qui se trouve sur le côté du bras de culbuteur (6) décrit une trajectoire périodique (17) qui comprend une composante de mouvement relativement faible dans une direction perpendiculaire à la face de coupe du premier élément de cisaillement (1).

10. Appareil selon l'une quelconque des revendications précédentes, dans lequel ledit deuxième élément de cisaillement (2) est constitué par une lame qui est aiguisée sur ses deux côtés.

11. Chaîne de traitement destinée au traitement et au transport de plantes et analogues, comprenant un transporteur et un appareil de cisaillement disposé le long dudit transporteur, lequel appareil de cisaillement comprenant un premier et un deuxième élément de cisaillement (1, 2) mobiles en rapprochement et en éloignement l'un vis-à-vis de l'autre et comprenant chacun une face de coupe, et une commande (6, 7, 9 à 12) destinée à assurer le mouvement d'au moins l'un des éléments de cisaillement (2), **caractérisé en ce que** la commande (6, 7, 9 à 12) de l'au moins l'un des éléments de cisaillement (2) est telle que le mouvement relatif des éléments de cisaillement (1, 2) comprend, outre une composante de mouvement perpendiculaire à leurs faces de coupe, une composante de mouvement parallèle à leurs faces de coupes de manière à créer un mouvement combiné de pivotement et de translation.

12. Chaîne de traitement selon la revendication 11, dans laquelle la commande (6, 7, 9 à 12) du deuxième élément de cisaillement (2) est réalisée sous la forme d'une commande périodique, de manière à ce que la composante du mouvement du deuxième élément de cisaillement parallèle à la face de coupe du premier élément de cisaillement (1) se poursuit dans la même direction après la mise en prise avec le premier élément de cisaillement (1) et avant que le mouvement de retour ne soit commencé.

13. Chaîne de traitement selon la revendication 10 ou 11, dans lequel l'une des extrémités du deuxième élément de cisaillement (2) décrit une trajectoire périodique (16) qui comprend une composante de mouvement relativement importante dans une direction perpendiculaire à la face de coupe du premier élément de cisaillement (1), et dans lequel l'autre extrémité du deuxième élément de cisaillement (2) décrit une trajectoire périodique (17) qui comprend une composante de mouvement relativement faible dans une direction perpendiculaire à la face de coupe du premier élément de cisaillement (1), dans lequel ladite une des extrémités de l'élément de cisaillement comprenant ladite composante relativement importante dans une direction perpendiculaire à la face de coupe du premier élément de cisaillement (1) est positionnée sur le côté de l'alimentation de l'appareil.
